# EUROPEAN PATENT APPLICATION

(11) **EP 2 445 283 A1**
(43) Date of publication of application: **25.04.2012**
(21) Application number: 11008351.6
(22) Date of filing: 17.10.2011
(51) Int. Cl.: H04W 64/00

(54) **Passive locating of UMTS handsets**

(30) Priority: 25.10.2010 GB 1017945; 29.09.2011 US 248829
(71) Applicant: Broadcom Corporation, Irvine, CA 92617 (US)
(72) Inventor: Shechter, Alon, 46795 Herzeliya (IL); Degtyar, Ilya, 75676 Rishon-Lezion (IL)
(74) Representative: Jehle, Volker Armin

(57) **Abstract**

Passive location determining of a 3G handset is provided. The method may include the following steps: sending a sequence of 3G 'Pings' directed at a specified handset over a 3G network; determining the specified handset user identifier and the serving base station of the specified handset based on reoccurrences of user identifiers responsive of the ping requests, captured from the forward access channel (FACH) of each base station; decoding the FACH of the serving base station responsive to an additional ping , yielding parameters required for receiving uplink dedicated channel (UL DCH); estimating, in each location associated with a base station, a time difference between fastest possible and actual arrival of a signal over the UL DCH sent by the specified handset, wherein the estimating is synchronized to the serving base station; and calculating the location of the specified handset, based on the estimated time differences associated with the locations.

## Description

### BACKGROUND

### 1. TECHNICAL FIELD

The present invention relates to the field of location identification, and more particularly, to identifying a location of user equipment within a cellular network.

### 2. DISCUSSION OF RELATED ART

Existing methods of computing the physical location of handsets (user equipments) in cellular communication networks are known in 2G/GSM and include, for example, A-GPS and U-TDOA. U-TDOA, or Uplink Time Difference of Arrival, is a real time locating technology for mobile phone networks that uses multilateration based on timing of received signals to locate a mobile phone. Assisted GPS, generally abbreviated as A-GPS, is a system which can improve the startup performance of a GPS satellite-based positioning system. It is used extensively with GPS-capable cellular phones.

### BRIEF SUMMARY

According to one aspect of the invention, a method of determining a physical location of a UMTS 3G handset is provided. The method may include the following steps: comprising: sending a sequence of 3G 'Pings' directed at a specified handset over a 3G network; determining the serving base station of the specified handset (usually the closest) based on reoccurrences of user identifiers responsive of the ping requests, captured from the forward access channel (FACH) of each base station; decoding the FACH of the serving base station responsive to an additional ping, yielding parameters required for receiving uplink dedicated channel (UL DCH); estimating, in each location associated with a base station, a time difference between fastest and actual arrival of a signal over the UL DCH sent by the specified handset, wherein the estimating is synchronized to the serving base station; and calculating the location of the specified handset, based on the estimated time differences associated with the locations.

According to another aspect of the invention, a system for determining a physical location of a UMTS 3G handset is provided. The system may include a location manager (LM) and a plurality of location measurement units (LMU), wherein the LM is in communication with a 3G cellular communication network comprising bases stations and handsets, wherein each LMU is located in proximity, more or less dense to respective base station, wherein the LM is configured to send a sequence of 3G ping requests directed at a specified handset over the cellular communication network, wherein each LMU is configured to detect reoccurrences of user identifiers sent over respective forward access channel (FACH) associated with the specified handset and send back to the LM, a number of the reoccurrences, on a communication channel other than the cellular communication network, wherein the LM is further configured to determine the serving base station on which the handset is camped (usually it is the closest base station being a base station physically closer to the specified handset than any other base station) base on the number of reoccurrences from each LMU, wherein the LMU associated with the serving base station is configured to decode the FACH of the serving base station in response to an additional ping request initiated by the LM and directed at the specified handset, to yield parameters required for receiving an uplink dedicated channel (UL DCH) from the specified handset, wherein the LM is further configured to time synchronize all LMUs according to the LMU associated with the serving base station, wherein the LMUs are configured to each estimate a time difference between the synchronized LMUs time boundaries and actual arrival of a signal (i.e., the time difference between the fastest possible and actual arrival of a signal) sent over the UL DCH by the specified handset, wherein the estimating is synchronized to the serving base station, and wherein the LM is further configured to calculate a physical location of the specified handset based on the estimated time differences sent by the LMUs.

According to an aspect,
a system comprises :
a location manager configured to:
   initiate transmission of a request for a user identifier of a communications device, and
   determine a serving base station for the communications device; and
a plurality of location measurement units (LMUs) in communication with each other and the location manager, wherein each LMU is configured to:
   detect transmissions of the user identifier from a base station in proximity to each LMU, and
   send information regarding a number of the transmissions of the user identifier to the location manager, wherein the information is used by the location manager to determine the serving base station.

Advantageously, the communications device is configured to transmit the user identifier to the base station responsive to receiving the request.

Advantageously, the location manager is further configured to determine the serving base station by determining that the serving base station is a particular base station in proximity to a particular LMU that sent a highest number of transmissions of the user identifier.

Advantageously, each LMU is further configured to monitor forward access channel (FACH) and/or random access channel (RACH) procedures with each respective base station to detect the transmissions.

Advantageously, the LMU in proximity to the serving base station is further configured to:
receive an additional request initiated by the location manager; and
determine parameters for receiving an uplink dedicated channel (UL DCH) from the communications device by decoding the FACH of the serving base station.

Advantageously, the location manager is further configured to synchronize other LMUs in the plurality of LMUs according to a timing schedule of the LMU in proximity to the serving base station.

Advantageously, each LMU is further configured to estimate a time difference between a fastest possible arrival of a signal sent over the UL DCH by the communications device and an actual arrival of the signal sent over the UL DCH by the communications device.

Advantageously, the LMU in proximity to the serving base station is further configured to calculate a physical location of the communications device based on the estimated time differences of each LMU.

According to an aspect,
a location measurement unit (LMU) in proximity to a base station comprises:
a receiver configured to receive transmissions of a user identifier in proximity to a communications device;
a synchronizer configured to synchronize the LMU according to a timing scheme of the base station;
a decoder configured to determine parameters for receiving an uplink dedicated channel (UL DCH) from the communications device by decoding a forward access channel (FACH) of the base station; and
an estimation module configured to estimate a time difference between a fastest possible arrival of a signal sent over the UL DCH by the communications device and an actual arrival of the signal sent over the UL DCH by the communications device.

Advantageously, the synchronizer is further configured to synchronize other LMUs according to the timing scheme of the base station.

Advantageously, the LMU is configured to send information regarding a number of the transmissions to a location manager.

Advantageously, the LMU is configured to receive information from the location manager designating the LMU as a master.

Advantageously, the LMU is configured to synchronize the other LMUs according to the timing scheme of the base station responsive to receiving the information from the location manager designating the LMU as a master.

Advantageously, the receiver is configured monitor forward access channel (FACH) and/or random access channel (RACH) procedures with the base station to receive the transmissions.

Advantageously, the LMU is further configured to calculate a physical location of the communications device based on the estimated time difference.

According to an aspect,
a method comprises:
initiating transmission of a request for a user identifier of a communications device;
receiving information regarding a number of transmissions of the user identifier from a plurality of location measurement units (LMUs) proximate to a plurality of base stations; and
determining, based on the information, a serving base station serving the communications device.

Advantageously,
the method further comprising:
synchronizing the LMUs according to a serving LMU proximate to the serving base station.

Advantageously,
the method further comprising:
calculating a physical location of the communications device based on estimated time differences sent by the LMUs.

Advantageously, each estimated time difference sent by each LMU is an estimated time difference between a fastest possible arrival of a signal sent over the uplink dedicated channel (UL DCH) by the communications device and an actual arrival of the signal sent over the UL DCH by the communications device.

Advantageously, the method further comprising initiating transmission of an additional request to a communications device, wherein the LMUs determine parameters for receiving the UL DCH from the communications device responsive to receiving the additional request.

These, additional, and/or other aspects and/or advantages of the present invention are: set forth in the detailed description which follows; possibly inferable from the detailed description; and/or learnable by practice of the present invention.

### BRIEF DESCRIPTION OF THE DRAWINGS

The present invention will be more readily understood from the detailed description of embodiments thereof made in conjunction with the accompanying drawings of which:
**Figure 1** is a high level schematic block diagram of a system according to some embodiments of the invention;
**Figure 2** is a high level schematic block diagram illustration an aspect according to some embodiments of the invention; and
**Figure 3** is a high level flowchart illustrating a method according to some embodiments of the invention.

### DETAILED DESCRIPTION

Prior to setting forth the detailed description, it may be helpful to set forth definitions of certain terms that will be used hereinafter.

The term "Universal Mobile Telecommunication System" commonly abbreviated to "UMTS" as used herein in this application refers to the third-generation (3G) mobile telecommunications technologies, which is also being developed into a 4G technology. The most common form of UMTS uses W-CDMA (IMT Direct Spread) as the underlying air interface but the system also covers TD-CDMA and TD-SCDMA. Being a complete network system, UMTS also covers the radio access network and the core network (Mobile Application Part, or MAP), as well as authentication of users via USIM cards (Subscriber Identity Module).

The term "Ping" or "Ping request as used herein in this application in the context of cellular communication networks refers to a cellular communication network administration utility used by a cellular communication operator to test whether a specified handset (user equipment) is reachable across the network. In return, the handset sends a user identifier.

The term "Forward Access Channel" commonly abbreviated to "FACH" as used herein in this application refers to A UMTS transport channel that forms the downlink half of a transport channel pair known as the RACH (Random Access Channel) / FACH (Forward Access Channel) combination. It is used for downlink signalling and small quantities of data.

The term "Random Access Channel" commonly abbreviated to "RACH" as used herein in this application refers to a shared channel that is used by wireless access terminals to access the access network, especially for initial access and bursty data transmission. A key feature of a Random Access Channel is that messages are not scheduled (compared to for example a "Dedicated Channel" in UMTS, that is assigned exclusively to one user at a time).

The term "Up Link Dedicated Channel" commonly abbreviated to "UL DCH" as used herein in this application refers to A UMTS logical channel allocated to an individual user (Handset) and typically used for dedicated traffic data communication.

With specific reference now to the drawings in detail, it is stressed that the particulars shown are by way of example and for purposes of illustrative discussion of the preferred embodiments of the present invention only, and are presented in the cause of providing what is believed to be the most useful and readily understood description of the principles and conceptual aspects of the invention. In this regard, no attempt is made to show structural details of the invention in more detail than is necessary for a fundamental understanding of the invention, the description taken with the drawings making apparent to those skilled in the art how the several forms of the invention may be embodied in practice.

Before explaining at least one embodiment of the invention in detail, it is to be understood that the invention is not limited in its application to the details of construction and the arrangement of the components set forth in the following description or illustrated in the drawings. The invention is applicable to other embodiments or of being practiced or carried out in various ways. Also, it is to be understood that the phraseology and terminology employed herein is for the purpose of description and should not be regarded as limiting.

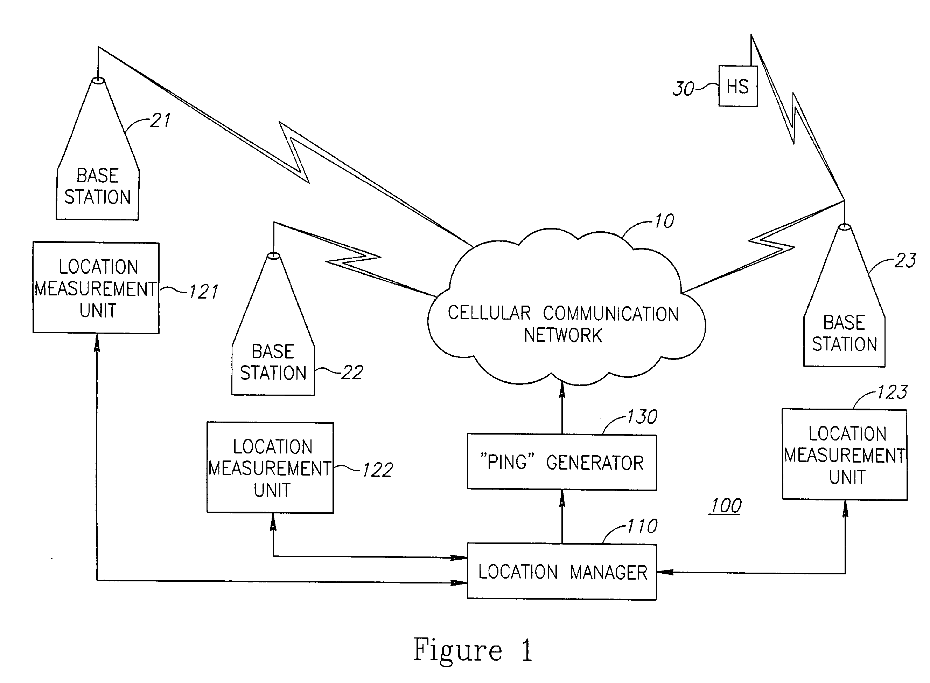

**Figure 1** is a high level schematic block diagram of a system according to some embodiments of the invention. System **100** may be deployed within a cellular communication network 10 that includes base stations such as **21-23** and handsets such as **30** (cellular communication devices, also referred to as user equipments). For the sake of simplicity only one handset **30** is shown. System **100** may include a location manager (LM) **110** and a plurality of location measurement units (LMU) 121-123, such that LM **110** is in communication with a 3G cellular communication network 10 via a 3G 'Ping' generator **130,** and wherein each LMU of **121-123** is located in proximity to a respective base station **21-23**. LM **110** and LMUs **121-123** are connected to each other by an independent communication channel.(i.e. - a communication channel other than cellular communication network **10**).

In operation, LM **110** is configured to send a sequence of 3G ping requests using 'Ping' generator **130,** directed at a specified handset **30** over cellular communication network 10. Each LMU **121-123** is instructed by LM **110** to monitor all FACH/RACH procedures with its respective base station **21-23** so that it detects reoccurrences of all user identifiers sent over respective base stations' forward access channel (FACH) associated among others with specified handset **30.** Each LMU **121-123** then sends back to LM **100**, the number of the reoccurrences, again, on a communication channel other than cellular communication network **10**.

Then, LM **110** determines the handset **30** user identifier and its serving base station (as shown in the figure, base station **23**) being a base station physically serving handset **30** , based on the max number of reoccurrences from each LMU. Then, LMU **123** which is associated with the serving base station **23** is configured to decode the FACH of the serving base station **23** in response to an additional ping request initiated by LM **110** and directed at specified handset **30**, to yield parameters required for receiving an uplink dedicated channel (UL DCH) from specified handset **30.**

LM **110** then synchronizes all remaining LMUs **121** and **122** according to LMU **123** such that synchronization is according to the timing schedule of serving base station **23.**

Then, the LMUs **121-123** are configured to estimate a time difference between fastest possible and actual arrival of a signal sent over the UL DCH by the specified handset, wherein the estimating is synchronized, as explained above, according to the serving base station. Finally, LM **110** is further configured to calculate a physical location of the specified handset based on the estimated time differences sent by the different LMUs.

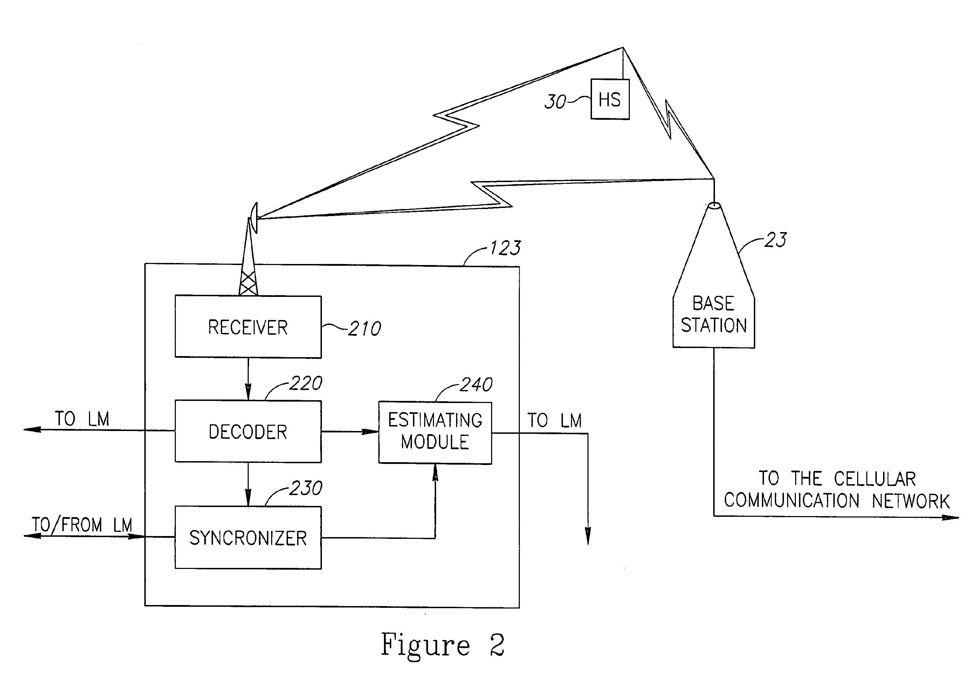

**Figure 2** is a high level schematic block diagram illustration in more details, an aspect according to some embodiments of the invention. LMU **123** is shown may include a receiver **210**, a decoder **220**, a synchronizer **230,** and an estimating module **240.** LMU **123** may receive signals transmitted by base station **23** as well a signal transmitted by specified handset **30.** It is understood however, that LMU **123** (a well as all other LMUs) operate seamlessly to the base stations and the handsets of cellular communication network and is absolutely passive and non-intervening.

In operation, receiver **210** receives the reoccurrences of user identifiers sent over the forward access channel (FACH) responsive of the ping requests by LM **110.** After LM **110** determines the target handset user identified and the LMU which is associated with the serving base station (in this case **23**), synchronizer **230** synchronizes all other LMUs **121** and **122** according to the timing scheme of base station **23.** Specifically, LMU **123** becomes a master whereas LMU **121** and **122** become slaves. Then, decoder **220** decodes the FACH of base station **23** in response to an additional ping request directed at the specified handset, to yield parameters required for receiving an uplink dedicated channel (UL DCH). These parameters are sent immediately, via LM **110** to the rest of the LMUs.

Then, estimating module **240**, in each LMU associated with a base station, estimates a time difference between fastest possible and actual arrival of a signal over the UL DCH sent by specified handset **30,** wherein the estimating is synchronized as explained above to the serving base station **23.** These estimations are sent by each LMU to LM **110** for calculating of the physical location of specified handset **30**, based on the estimations from each location of respective LMU.

Consistent with one embodiment of the invention, the communication between the LM and the LMUs is independent of the cellular communication network and based on Internet Protocol (IP) communication.

Consistent with one embodiment of the invention, the LMUs are synchronized based on Global Positioning System (GPS) or Internet Protocol (IP) timing.

Consistent with one embodiment of the invention, the 3G ping requests are in a form of a silent SMS.

Consistent with one embodiment of the invention, the parameters decoded by the LMU associated with the serving base station comprise at least one of: UL scrambling code, activation time, frame and chips offsets.

Consistent with one embodiment of the invention, the synchronization according to the LMU associated with the serving base station is associated with at least one of: chip, slot and frame level of the serving base station.

Consistent with one embodiment of the invention, wherein the user identifier is a Temporary Mobile Subscriber Identity (TMSI) or IMSI.

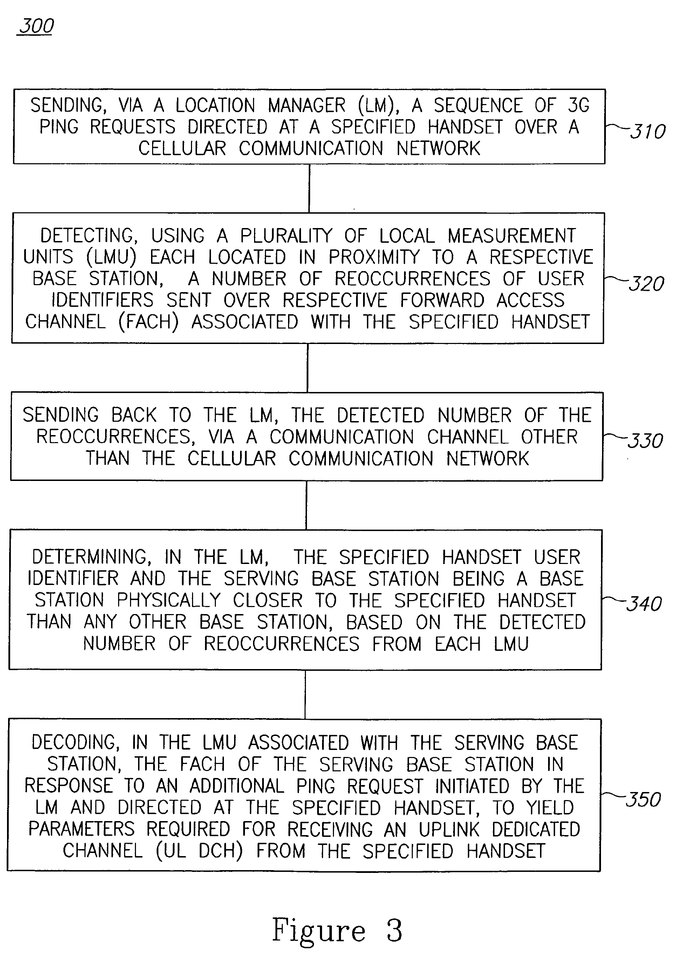

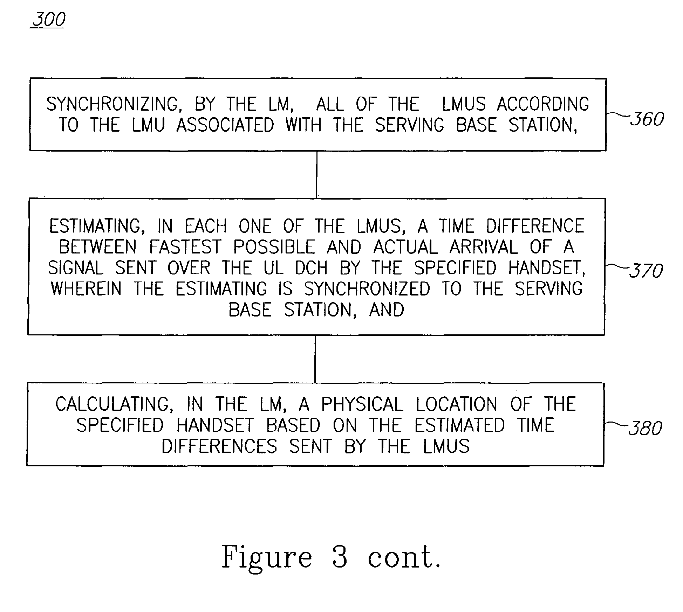

**Figure 3** is a high level flowchart illustrating a method **300** according to some embodiments of the invention. Although method **300** is not necessarily bound to the aforementioned architecture of system **100,** the stages of method **300** are described below in conjunction with some of the elements of system 100.

Method **300** may start with the step of sending, via a location manager **110** (LM), a sequence of 3G ping requests directed at a specified handset 30 over a cellular communication network **10.** The method then goes on to the step of detecting, using a plurality of local measurement units **121-123** (LMU) each located in proximity to a respective base station, a number of reoccurrences of user identifiers sent over respective forward access channel (FACH) associated with the specified handset **30.** The method proceeds to the step of sending back to the LM **110,** the detected number of the reoccurrences, via a communication channel other than the cellular communication network. Then the method goes on to the step of determining, in the LM **110,** the specified handset user identifier and the serving base station **23** being a base station physically closer to the specified handset **30** than any other base station, based on the detected number of reoccurrences from each LMU **121-123.** The method goes on to the step of decoding, in the LMU **123** associated with the serving base station **23** the FACH of the serving base station in response to an additional ping request initiated by the LM **110** and directed at the specified handset**30**, to yield parameters required for receiving an uplink dedicated channel (UL DCH) from the specified handset **30.** The method then proceeds to the step of synchronizing, by the LM **110**, all of the LMUs **121-122** according to the LMU **123** associated with the serving base station 23. The method then goes on to the step of estimating, in each one of the LMUs **121-123**, a time difference between fastest possible and actual arrival of a signal sent over the UL DCH by the specified handset **30,** wherein the estimating is synchronized to the serving base station **23.** Then finally, the method goes on to the step of calculating, in the LM **110**, a physical location of the specified handset **30** based on the estimated time differences sent by the LMUs **121-123.**

As will be appreciated by one skilled in the art, aspects of the present invention may be embodied as a system, method or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present invention may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in base band or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wire-line, optical fiber cable, RF, etc., or any suitable combination of the foregoing.

Computer program code for carrying out operations for aspects of the present invention may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described above with reference to flowchart illustrations and/or portion diagrams of methods, apparatus (systems) and computer program products according to embodiments of the invention. It will be understood that each portion of the flowchart illustrations and/or portion diagrams, and combinations of portions in the flowchart illustrations and/or portion diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or portion diagram portion or portions.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or portion diagram portion or portions.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or portion diagram portion or portions.

The aforementioned flowchart and diagrams illustrate the architecture, functionality, and operation of possible implementations of systems, methods and computer program products according to various embodiments of the present invention. In this regard, each portion in the flowchart or portion diagrams may represent a module, segment, or portion of code, which comprises one or more executable instructions for implementing the specified logical function(s). It should also be noted that, in some alternative implementations, the functions noted in the portion may occur out of the order noted in the figures. For example, two portions shown in succession may, in fact, be executed substantially concurrently, or the portions may sometimes be executed in the reverse order, depending upon the functionality involved. It will also be noted that each portion of the portion diagrams and/or flowchart illustration, and combinations of portions in the portion diagrams and/or flowchart illustration, can be implemented by special purpose hardware-based systems that perform the specified functions or acts, or combinations of special purpose hardware and computer instructions.

In the above description, an embodiment is an example or implementation of the inventions. The various appearances of "one embodiment," "an embodiment" or "some embodiments" do not necessarily all refer to the same embodiments.

Although various features of the invention may be described in the context of a single embodiment, the features may also be provided separately or in any suitable combination. Conversely, although the invention may be described herein in the context of separate embodiments for clarity, the invention may also be implemented in a single embodiment.

Reference in the specification to "some embodiments", "an embodiment", "one embodiment" or "other embodiments" means that a particular feature, structure, or characteristic described in connection with the embodiments is included in at least some embodiments, but not necessarily all embodiments, of the inventions.

It is to be understood that the phraseology and terminology employed herein is not to be construed as limiting and are for descriptive purpose only.

The principles and uses of the teachings of the present invention may be better understood with reference to the accompanying description, figures and examples.

It is to be understood that the details set forth herein do not construe a limitation to an application of the invention.

Furthermore, it is to be understood that the invention can be carried out or practiced in various ways and that the invention can be implemented in embodiments other than the ones outlined in the description above.

It is to be understood that the terms "including", "comprising", "consisting" and grammatical variants thereof do not preclude the addition of one or more components, features, steps, or integers or groups thereof and that the terms are to be construed as specifying components, features, steps or integers.

If the specification or claims refer to "an additional" element, that does not preclude there being more than one of the additional element.

It is to be understood that where the claims or specification refer to "a" or "an" element, such reference is not be construed that there is only one of that element.

It is to be understood that where the specification states that a component, feature, structure, or characteristic "may", "might", "can" or "could" be included, that particular component, feature, structure, or characteristic is not required to be included.

Where applicable, although state diagrams, flow diagrams or both may be used to describe embodiments, the invention is not limited to those diagrams or to the corresponding descriptions. For example, flow need not move through each illustrated box or state, or in exactly the same order as illustrated and described.

Methods of the present invention may be implemented by performing or completing manually, automatically, or a combination thereof, selected steps or tasks.

The term "method" may refer to manners, means, techniques and procedures for accomplishing a given task including, but not limited to, those manners, means, techniques and procedures either known to, or readily developed from known manners, means, techniques and procedures by practitioners of the art to which the invention belongs.

The descriptions, examples, methods and materials presented in the claims and the specification are not to be construed as limiting but rather as illustrative only.

Meanings of technical and scientific terms used herein are to be commonly understood as by one of ordinary skill in the art to which the invention belongs, unless otherwise defined.

The present invention may be implemented in the testing or practice with methods and materials equivalent or similar to those described herein.

Any publications, including patents, patent applications and articles, referenced or mentioned in this specification are herein incorporated in their entirety into the specification, to the same extent as if each individual publication was specifically and individually indicated to be incorporated herein. In addition, citation or identification of any reference in the description of some embodiments of the invention shall not be construed as an admission that such reference is available as prior art to the present invention.

While the invention has been described with respect to a limited number of embodiments, these should not be construed as limitations on the scope of the invention, but rather as exemplifications of some of the preferred embodiments. Other possible variations, modifications, and applications are also within the scope of the invention.

## Claims

1. A system comprising:
a location manager configured to:
initiate transmission of a request for a user identifier of a communications device, and
determine a serving base station for the communications device; and
a plurality of location measurement units (LMUs) in communication with each other and the location manager, wherein each LMU is configured to:
detect transmissions of the user identifier from a base station in proximity to each LMU, and
send information regarding a number of the transmissions of the user identifier to the location manager, wherein the information is used by the location manager to determine the serving base station.

2. The system of claim 1, wherein the communications device is configured to transmit the user identifier to the base station responsive to receiving the request.

3. The system of claim 1, wherein the location manager is further configured to determine the serving base station by determining that the serving base station is a particular base station in proximity to a particular LMU that sent a highest number of transmissions of the user identifier.

4. The system of claim 1, wherein each LMU is further configured to monitor forward access channel (FACH) and/or random access channel (RACH) procedures with each respective base station to detect the transmissions.

5. The system of claim 4, wherein the LMU in proximity to the serving base station is further configured to:
receive an additional request initiated by the location manager; and
determine parameters for receiving an uplink dedicated channel (UL DCH) from the communications device by decoding the FACH of the serving base station.

6. The system of claim 5, wherein the location manager is further configured to synchronize other LMUs in the plurality of LMUs according to a timing schedule of the LMU in proximity to the serving base station.

7. The system of claim 6, wherein each LMU is further configured to estimate a time difference between a fastest possible arrival of a signal sent over the UL DCH by the communications device and an actual arrival of the signal sent over the UL DCH by the communications device.

8. The system of claim 7, wherein the LMU in proximity to the serving base station is further configured to calculate a physical location of the communications device based on the estimated time differences of each LMU.

9. A location measurement unit (LMU) in proximity to a base station comprising:
a receiver configured to receive transmissions of a user identifier in proximity to a communications device;
a synchronizer configured to synchronize the LMU according to a timing scheme of the base station;
a decoder configured to determine parameters for receiving an uplink dedicated channel (UL DCH) from the communications device by decoding a forward access channel (FACH) of the base station; and
an estimation module configured to estimate a time difference between a fastest possible arrival of a signal sent over the UL DCH by the communications device and an actual arrival of the signal sent over the UL DCH by the communications device.

10. The LMU of claim 9, wherein the synchronizer is further configured to synchronize other LMUs according to the timing scheme of the base station.

11. The LMU of claim 10, wherein the LMU is configured to send information regarding a number of the transmissions to a location manager.

12. The LMU of claim 11, wherein the LMU is configured to receive information from the location manager designating the LMU as a master.

13. The LMU of claim 12, wherein the LMU is configured to synchronize the other LMUs according to the timing scheme of the base station responsive to receiving the information from the location manager designating the LMU as a master.

14. The LMU of claim 9, wherein the receiver is configured monitor forward access channel (FACH) and/or random access channel (RACH) procedures with the base station to receive the transmissions.

15. A method, comprising:
initiating transmission of a request for a user identifier of a communications device;
receiving information regarding a number of transmissions of the user identifier from a plurality of location measurement units (LMUs) proximate to a plurality of base stations; and
determining, based on the information, a serving base station serving the communications device.
